# EUROPEAN PATENT APPLICATION

(11) **EP 2 663 128 A1**
(43) Date of publication of application: **13.11.2013**
(21) Application number: 12744946.0
(22) Date of filing: 08.02.2012
(51) Int. Cl.: H04W 48/16, G08B 17/00, G08B 25/10, H04J 3/00, H04W 4/04, H04W 72/04

(54) **WIRELESS DEVICE AND WIRELESS COMMUNICATION SYSTEM**

(30) Priority: 09.02.2011 JP 2011026293
(71) Applicant: Panasonic Corporation, Osaka 571-8501 (JP)
(72) Inventor: KURITA, Masanori, Chuo-ku, Osaka 540-6207 (JP); SUZUKI, Junichi, Chuo-ku, Osaka 540-6207 (JP)
(74) Representative: Müller-Boré & Partner Patentanwälte
(86) International application number: PCT/JP2012/052813
(87) International publication number: WO 2012/108450

(57) **Abstract**

The wireless device selects one from plural frequency channels prepared. The wireless device receives an electric wave via the frequency channel selected. When receiving the electric wave, the wireless device demodulates the electric wave to obtain a bit sequence. The wireless device checks whether the bit sequence obtained has a predetermined bit pattern. When the bit sequence has the predetermined bit pattern, the wireless device concludes that the received electric wave is identical to an intended wireless signal including predetermined information. When the bit sequence does not have the predetermined bit pattern, the wireless device concludes that the received electric wave is not identical to the intended wireless signal. When concluding that the received electric wave is identical to the intended wireless signal, the wireless device decodes the bit sequence to acquire the predetermined information. When concluding that the received electric wave is not identical to the intended wireless signal, the wireless device selects from the plural frequency channels a frequency channel different from the previously selected frequency channel.

## Description

### Technical Field

The present invention relates to wireless devices and wireless communication systems constituted by plural (multiple) wireless devices.

### Background Art

As prior wireless devices and wireless communication systems, fire alarm devices and the fire alarm systems disclosed in document 1 (JP 2009-265940 A) have been proposed. This prior system includes plural fire alarm devices respectively serving as wireless devices. When any fire alarm device detects a fire, the fire alarm device which detects a fire notifies other fire alarm devices of fire occurrence through wireless communication. Thus, all the fire alarm devices including the fire alarm which detects a fire as well as the other fire alarm devices cooperate to announce fire occurrence. Therefore, fire occurrence can be announced immediately and successfully.

The following wireless communication system has been proposed as another prior instance. For example, there has been a system including fire alarm systems installed in houses in a condominium and a monitoring device (fire receiver) connected to the respective fire alarm systems via a wire. In this prior system, when a fire occurs at any house, the fire alarm system in this house notifies the monitoring device of fire occurrence. Subsequently, when the monitoring device announces fire occurrence to the fire alarm systems in the houses other than the house where a fire has occurred. Consequently, the fire alarm system in the house where a fire has occurred cooperates with the fire alarm systems in the houses other than the house where a fire has occurred, to announce fire occurrence. Therefore, fire occurrence can be announced immediately and successfully to all the houses in the condominium.

In this regard, the fire alarm system installed in each house includes a master connected to the monitoring device via a wire and plural slaves configured to perform wireless communication with the master. Note that, the slave of each fire alarm system is designed to communicate with only the master in the system including this slave in principle and to not communicate with the masters in other systems (fire alarm systems installed in the other houses).

However, there is a probability that a wireless signal (electric wave) sent from the master installed in a house in the condominium reaches an adjacent house and interferes with a wireless signal sent from the master installed in this adjacent house. In view of this, in the prior art, different frequency channels are used in the fire alarm systems installed in the adjacent houses. Hence, interference between the wireless signals of the fire alarm systems can be suppressed.

However, a frequency band for wireless signals available for a wireless communication system such as the aforementioned fire alarm system is regulated by law (Japanese radio law). The number of frequency channels available for each fire alarm system is few, and an interval between channels is only several tens kilo hertz. Therefore, in some cases, a difference between electrical power regarding a regular frequency channel received by a slave and adjacent channel leakage power regarding another channel different from the regular channel is relatively small. In these cases, interference between the wireless signals of the fire alarm systems cannot be suppressed. Accordingly, interference between wireless signals is likely to cause a problem that a wireless device (slave) fails to receive information (e.g., a notification of fire occurrence) which should be received.

Though the frequency channels are selected in conformity with stipulation by Japanese radio law, such a problem relates to adjacent channel leakage power which cannot be ignored. This problem would always arise in a wireless communication system directed to equipment control such as a wireless crime-prevention and announcement system and a wireless remote control system, in addition to a wireless communication system such as a fire alarm system. Note that, in other countries, available frequency channels are regulated by law similar to Japanese radio law. Therefore, it is presumable that aforementioned problem still exists.

### Summary of Invention

In view of the above insufficiency, the present invention has aimed to, even when interference between wireless signals occurs, enable reception of information transferred by the wireless signal.

The wireless device of the first aspect in accordance with the present invention includes a changing unit, a receiving unit, a detecting unit, and an information acquiring unit. The changing unit is configured to select one from plural frequency channels prepared. The receiving unit is configured to receive an electric wave via the frequency channel selected by the changing unit and designed to, when receiving the electric wave, demodulate the electric wave to obtain a bit sequence. The detecting unit is configured to check whether the bit sequence obtained by the receiving unit has a predetermined bit pattern. The detecting unit is configured to conclude that the received electric wave is identical to an intended wireless signal including predetermined information when the bit sequence has the predetermined bit pattern. The detecting unit is configured to conclude that the received electric wave is not identical to the intended wireless signal when the bit sequence does not have the predetermined bit pattern. The information acquiring unit is configured to, when the detecting unit concludes that the received electric wave is identical to the intended wireless signal, decode the bit sequence to acquire the predetermined information. The changing unit is configured to, when the detecting unit concludes that the received electric wave is not identical to the intended wireless signal, select from the plural frequency channels a frequency channel different from the previously selected frequency channel.

With regard to the wireless device of the second aspect in accordance with the present invention, in the wireless device of the first aspect, the receiving unit is configured to, when detecting an electric wave in the frequency channel selected by the changing unit, measure a signal level of the detected electric wave. The changing unit is configured to, when the detecting unit concludes that the received electric wave is not identical to the intended wireless signal, select one from the plural frequency channels other than the previously selected frequency channel in sequence to acquire the signal levels of the respective plural frequency channels other than the previously selected frequency channel from the receiving unit. The changing unit is configured to refer to the signal levels acquired from the receiving unit and select the frequency channel corresponding to the electric wave having the highest signal level.

With regard to the wireless device of the third aspect in accordance with the present invention, in the wireless device of the first or second aspect, the receiving unit is configured to, when detecting an electric wave in the frequency channel selected by the changing unit, measure a signal level of the detected electric wave. The receiving unit is configured to, when the measured signal level is not less than a threshold for carrier detection, start to receive the detected electric wave. The plural frequency channels are respectively corresponding to the thresholds. The plural frequency channels include a predetermined frequency channel corresponding to a preliminarily associated wireless device. The threshold corresponding to the predetermined frequency channel is the lowest.

With regard to the wireless device of the fourth aspect in accordance with the present invention, in the wireless device of the third aspect, the wireless device further comprises a sending unit configured to send a wireless signal via the predetermined frequency channel.

The wireless communication system of the first aspect in accordance with the present invention includes plural subsystems. Each of the plural subsystems comprises: a sole master; and a slave configured to communicate with the master. Mutually different frequency channels are respectively allocated to the plural subsystems. The master is configured to perform wireless communication with the slave via the frequency channel allocated to the subsystem to which the master belongs. The master is configured to send a first wireless signal in a first period common to the plural subsystems and wait a second wireless signal in a second period which is common to the plural subsystems and is subsequent to the first period. The first wireless signal has a predetermined bit pattern. The slave is defined by the wireless device according to any one of the first to fourth aspects. The slave is configured to send the second wireless signal in the second period in response to reception of the first wireless signal. The master is configured to prepare plural time slots in the second period. The master is configured to allocate the time slot to the slave included in the subsystem to which the master belongs. The slave is configured to send the second wireless signal to the master by use of the allocated time slot.
The master is configured to judge whether a no-reply slave exists with regard to the slave included in the subsystem to which the master belongs. The no-reply slave is defined by the slave that sends the second wireless signal which the master fails to receive. The master is configured to, when concluding that the no-reply slave exists, change the time slot for the no-reply slave to a different time slot.

With regard to the wireless communication system of the second aspect in accordance with the present invention, in the wireless communication system of the first aspect, the master is configured to, when concluding that the no-reply slave exists, exchange the time slot for the no-reply slave and the time slot allocated to the slave that sends the second wireless signal which the master successfully receives.

With regard to the wireless device of the third aspect in accordance with the present invention, in the wireless communication system of the first aspect, the plural time slots include a spare time slot which is not allocated to any slave. The master is configured to select the spare time slot as the different time slot.

With regard to the wireless communication system of the fourth aspect in accordance with the present invention, in the wireless communication system of the first aspect, the master is configured to judge whether non-electric-wave period is present in the second period, the non-electric-wave period being defined as a period in which any slave in other subsystems sends no second wireless signal. The master is configured to, when concluding that the non-electric-wave period is present in the second period, select the time slot corresponding to the non-electric-wave period as the different time slot.

With regard to the wireless communication system of the fifth aspect in accordance with the present invention, in the wireless communication system of the first aspect, the master is configured to measure a reception level of the second wireless signal. The master is configured to, when concluding that the no-reply slave exists, exchange the time slot for the no-reply slave and the time slot allocated to the slave associated with the second wireless signal having the highest reception level.

With regard to the wireless communication system of the sixth aspect in accordance with the present invention, in the wireless communication system of the first aspect, the master is configured to measure a reception level of the second wireless signal from the slave belonging to another subsystem in the second period. The master is configured to judge whether a low electric wave period in which the measured reception level is not greater than a predetermined threshold is present in the second period. The master is configured to, when concluding that the low electric wave period is present in the second period, select the time slot corresponding to the low electric wave period as the different time slot.

### Brief Description of the Drawings

**FIG. 1** is a flow chart illustrating an operation of the wireless device (slave) of the first embodiment,
**FIG. 2** is a diagram illustrating a configuration of the fire alarm system (wireless communication system) including the above wireless devices,
**FIG. 3** is a block diagram illustrating the master and the slave of the above fire alarm system,
**FIG. 4** is a diagram illustrating the frame format of the wireless signal in the above fire alarm system,
**FIG. 5** is a time chart illustrating an operation in the above fire alarm system,
**FIG. 6** is a diagram illustrating interference between the wireless signals in the above fire alarm system,
**FIG. 7** is a diagram illustrating how to change the slot number in the above fire alarm system,
**FIG. 8** is a diagram illustrating how to change the slot number in the above fire alarm system,
**FIG. 9** is a diagram illustrating how to change the slot number in the above fire alarm system,
**FIG. 10** is a diagram illustrating how to change the slot number in the above fire alarm system,
**FIG. 11** is a diagram illustrating how to change the slot number in the above fire alarm system, and
**FIG. 12** is a time chart illustrating an operation of measuring the reception level of the wireless signal in the above fire alarm system.

### Description of Embodiments

The following detailed explanations referring to drawings are made to an embodiment in which the technical concept in accordance with the present invention is applied to a wireless device (fire alarm) and a wireless communication system (fire alarm system) which are described in the prior art. However, the wireless device and the wireless communication system to which the technical concept in accordance with the present invention is applicable are not limited to a fire alarm and a fire alarm system. For example, the technical concept in accordance with the present invention may be applicable to a wireless device provided with a crime monitoring sensor configured to detect intrusion of a suspicious individual and a security system employing the same wireless device.

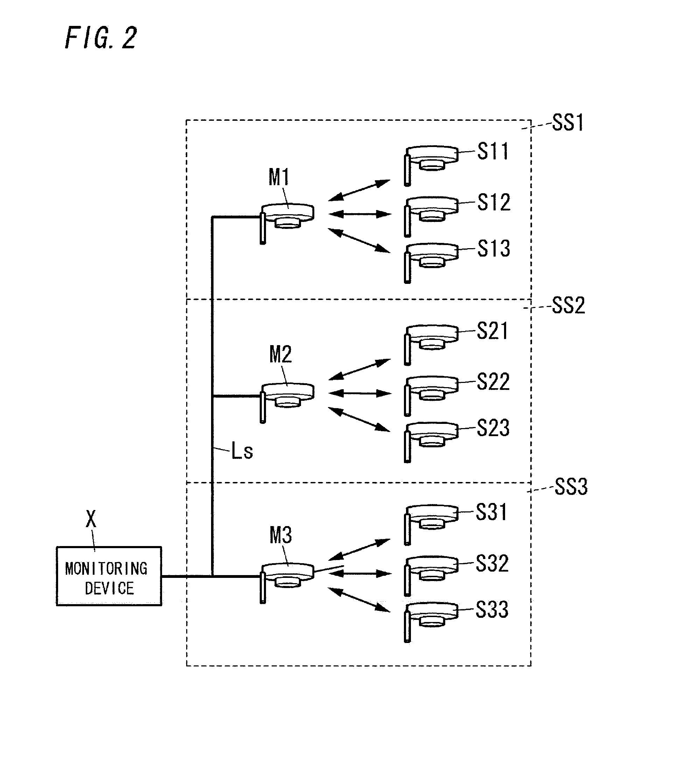

As shown in **FIG. 2****,** the fire alarm system (wireless communication system) of the present embodiment includes plural (three, in the illustrated instance) subsystems **SS1** to **SS3** and a monitoring device **X** coupled to the masters **M1** to **M3** of the respective subsystems **SSi (i** = **1, 2, 3)** via a communication line Ls. The subsystem SSi includes the single master Mi and one or more (three, in the illustrated instance) wireless device (slave) **Sij (i = 1, 2, 3; j = 1, 2, 3)** designed to perform wireless communication with the master **Mi.** The subsystem SSi may installed in a residence of a condominium or premises of a commercial facility.

As mentioned above, the wireless communication system of the present embodiment includes the plural (three, in the illustrated instance) masters **Mi** and the plural (nine, in the illustrated instance) slaves **Sij.**

Each of the plural masters **Mi** constitutes the subsystem SSi together with the slave Sij designed to perform wireless communication with this master **Mi.** The plural masters **Mi** are configured to send a first wireless signal in a first period (downlink period) **DT** and wait a second wireless signal in a second period (uplink period) **UT** subsequent to the first period (downlink period) **DT.** In the present embodiment, frequency channels are respectively allocated to the plural subsystems **SSi.** Therefore, the master **Mi** is configured to send a wireless signal (first wireless signal) by use of the frequency channel allocated to the subsystem **SSi** to which the master **Mi** belongs. In brief, the plural masters **Mi** are configured to send the first wireless signals via the mutually different frequency channels.

Each of the slaves **Si** is configured to send the second wireless signal in the second period (uplink period) **UT** in response to reception of the first wireless signal. Each slave **Si** is configured to select, from plural frequency channels prepared, a frequency channel used for receiving the first wireless signal. In an initial state, the slave **Si** selects a frequency channel allocated to the subsystem **SSi** to which this slave **Si** belongs. In other words, in the initial state, each slave **Si** is configured to receive a first wireless signal from the master **Mi** belonging to the subsystem **SSi** to which this slave **Si** belongs.

Further, the monitoring device **X** performs communication (wired communication) with each master **Mi** via the communication line **Ls.** For example, the monitoring device **X** is installed in a management room of a condominium or premises. Note that, in the present embodiment, the monitoring device **X** is installed in a condominium.

The slave **Sij** includes a slave controller **20,** an antenna **21,** a wireless communicator **22,** a sensor **23,** and a battery power supply **24.** The wireless communicator **22** transmits and receives a wireless signal via a medium defined by a radio wave in conformity with "security radio equipment for low power radio station" stated in regulations of enforcement of the Japanese Radio Act. The wireless communicator **22** is configured to transmit and receive a wireless signal via a frequency channel selected from plural mutually different frequency channels prepared. The sensor **23** is a fire sensor designed to detect presence of a smoke or heat caused by a fire. Note that, in the case of a security system, the sensor **23** may be a crime-prevention sensor, such as, a human sensor having a pyroelectric device designed to detect presence of infrared emitted from a human body, and a breakage sensor designed to detect vibration of a window glass. The slave controller **20** includes a microcomputer as its primary component. When the sensor **23** detects a fire or when the slave controller **20** is notified of a notification of fire occurrence by the master **Mi,** the slave controller **20** performs a process of making a speaker (not shown) produce a warning sound (e.g., a buzzer sound and a voice message announcing fire occurrence), and a process of controlling the wireless communicator **22** to notify the master **Mi** of fire occurrence via wireless communication. The battery power supply **24** uses a primary battery or a secondary battery as a power source and generates driving power for the slave controller **20,** the wireless communicator **22,** and the sensor **23** from the power source and supplies the generated driving power thereto. For the purpose of saving energy in the battery as possible, the aforementioned slaves Sij perform receiving operation, not always but intermittently, as mentioned below.

In the present embodiment, the slave controller **20** is configured to serve as a changing unit, a detecting unit, and an information acquiring unit. Moreover, the wireless communicator **22** is configured to serve as a receiving unit and a sending unit.

The changing unit is configured to select one from plural frequency channels prepared. The plural frequency channels include mutually different frequency channels respectively allocated to the plural subsystems **SSi.** In the initial state, the changing unit selects a frequency channel allocated to the subsystem SSi to which a corresponding slave Sij belongs. In the present embodiment, frequency channels are determined in conformity with "security radio equipment for low power radio station, ARIB STANDARD, RCR STD-30". For example, this standard defines twenty-four frequency channels. Occupied bandwidth of the frequency channels is from 426.2625 MHz to 426.8375 MHz, and an interval between frequency channels is 25 kHz. For example, in the initial state, the frequency channels of 426.2625 MHz, 426.2875 MHz, and 426.3125 MHz are allocated to the subsystems **SS1, SS2,** and SS3, respectively. Note that, the plural frequency channels are not limited to the above instances.

The receiving unit is configured to receive an electric wave via the frequency channel selected by the changing unit. The receiving unit is configured to, when detecting an electric wave in the frequency channel selected by the changing unit, measure a signal level of the detected electric wave. The receiving unit is configured to, when the measured signal level is not less than a threshold for carrier detection, start to receive the detected electric wave. The plural frequency channels are respectively corresponding to the thresholds. The plural frequency channels include a predetermined frequency channel corresponding to a preliminarily associated wireless device. The predetermined frequency channel is defined as a frequency channel allocated to the subsystem **SSi** to which the slave **Sij** belongs. The threshold corresponding to the predetermined frequency channel is the lowest. The receiving unit is designed to, when receiving the electric wave, demodulate the electric wave to obtain a bit sequence.

The detecting unit is configured to check whether the bit sequence obtained by the receiving unit has a predetermined bit pattern. The predetermined bit pattern is, for example, a synchronization bit pattern mentioned below. The detecting unit is configured to conclude that the received electric wave is identical to an intended wireless signal including predetermined information when the bit sequence has the predetermined bit pattern. The detecting unit is configured to conclude that the received electric wave is not identical to the intended wireless signal when the bit sequence does not have the predetermined bit pattern. The predetermined information is, for example, a message **205** mentioned below. In the present embodiment, the first wireless signal is selected as the intended wireless signal.

The information acquiring unit is configured to, when the detecting unit concludes that the received electric wave is identical to the intended wireless signal, decode the bit sequence to acquire the predetermined information (the message **205).**

The changing unit is configured to, when the detecting unit concludes that the received electric wave is not identical to the intended wireless signal, select from the plural frequency channels a frequency channel different from the previously selected frequency channel.

Especially, in the present embodiment, the changing unit is configured to, when the detecting unit concludes that the received electric wave is not identical to the intended wireless signal, select one from the plural frequency channels other than the previously selected frequency channel in sequence to acquire the signal levels of the respective plural frequency channels other than the previously selected frequency channel from the receiving unit. The changing unit is configured to refer to the signal levels acquired from the receiving unit and select the frequency channel corresponding to the electric wave having the highest signal level.

The sending unit is configured to send a wireless signal (second wireless signal) via the predetermined frequency channel.

The master **Mi** includes a master controller **10,** an antenna **11,** a wireless communicator **12,** a sensor **13,** a wired communicator **14,** and a power supply **15.** The wireless communicator **12** transmits and receives a wireless signal via a medium defined by a radio wave in conformity with "security radio equipment for low power radio station" stated in regulations of enforcement of the Japanese Radio Act, in a similar manner as the wireless communicator **22** of the slave **Sij.** The wireless communicator **12** is configured to transmit and receive a wireless signal via a frequency channel selected from plural mutually different frequency channels prepared. The wired communicator **14** performs wired communication with the monitoring device **X** as well as other masters **Mj (j** ≠ i) via the communication line **Ls.** The sensor **13** is a fire sensor designed to detect presence of a smoke or heat caused by a fire. Note that, in the case of a security system, the sensor **13** may be a crime -prevention sensor, such as, a human sensor having a pyroelectric device designed to detect presence of infrared emitted from a human body, and a breakage sensor designed to detect vibration of a window glass.

The master controller **10** includes a microcomputer as its primary component, in a similar manner as the slave controller **20.** When the sensor **13** detects a fire or when the master controller **10** is notified of a notification of fire occurrence via a wireless signal by any slave Sij, the master controller **10** performs a process of making a speaker (not shown) produce a warning sound (e.g., a buzzer sound and a voice message announcing fire occurrence), for example. Further, the master controller **10** performs a process (e.g., a process of starting inspection mentioned below) based on instructions received from the monitoring device **X** via the wired communicator **14,** and a process of notifying the monitoring device **X.** The power supply **15** converts AC power supplied from an external power source (e.g., a commercial AC power source 100) into a DC power and supplies the resultant DC power to the master controller **10,** the wireless communicator **12,** the sensor **13,** and the wired communicator **14.** The master **Mi** operates with power provided from the external power source. Thus, differently from the slave **Sij,** the wireless communicator **12** always waits for reception except transmission.

Peculiar identifiers are respectively allocated to masters **Mi** and slaves **Sij** and are respectively stored in memories of the controllers **10** and **20.** Therefore, destinations and senders of wireless signals and wired signals can be identified. For example, the identifier is defined as a combination of a system number (identifier for the master **Mi)** "i" used for identifying the subsystem **SSi** and a slave number "j" used for identifying the slave **Sij** included in the subsystem **SSi.** For example, in a process of registration of each slave **Sij** to the master **Mi,** the master **Mi** allocates the system number "i" and the slave number "j", that is, an identifier to each slave **Sij.**

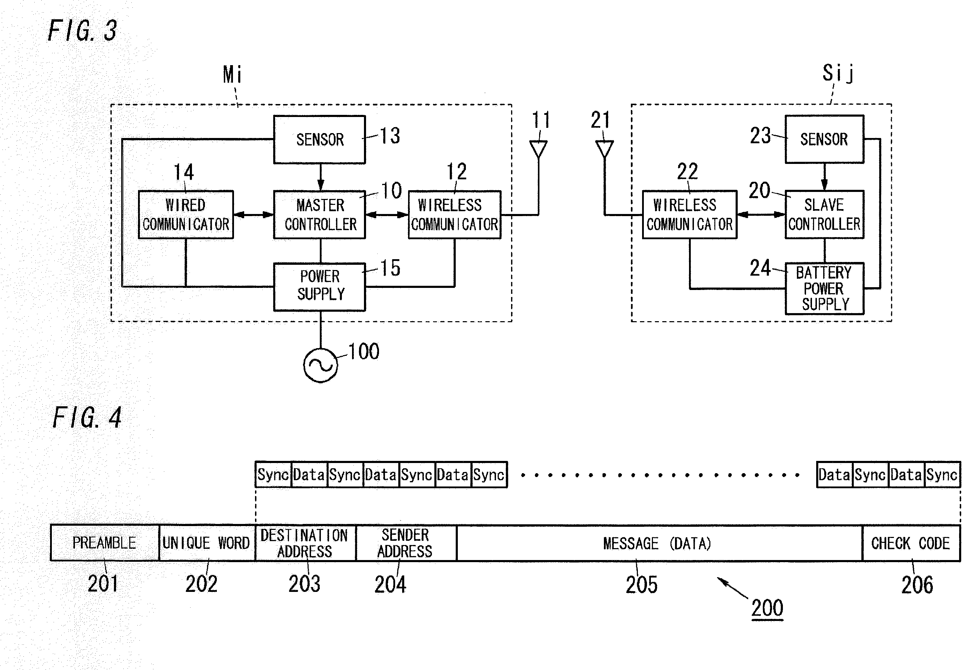

**FIG. 4** shows a frame format **200** of a wireless signal (first or second wireless signal) transmitted and received in the subsystem **SSi** in the present embodiment. A single frame thereof includes a synchronization bit (preamble) **201,** a frame synchronization pattern (unique word) **202,** a destination address 203, a sender address **204,** a message (data) **205,** and a check code (e.g., a CRC code) **206.** When an identifier is designated as the destination address 203, only a wireless device (the master **Mi** or the slave **Sij)** to which this identifier is allocated receives a wireless signal and obtains a message therefrom. In contrast, when a specific bit sequence (e.g., a bit sequence with all bits of 1) which is not allocated to any terminal is designated as the destination address **203,** this wireless signal is broadcast (multicast), and all the terminals obtain a message included therein. In brief, this specific bit sequence is defined as a broadcast address. For example, a wireless signal including a periodical monitoring message or an inspection start message mentioned below is broadcast from the master **Mi** to all the slaves **Sij.** Note that, a signal of the wired communication between the master **Mi** of the subsystem **SSi** and the monitoring device **X** and between the masters **Mi** of the subsystems SSi has the same frame format 200 shown in **FIG. 4****.**

Besides, as mentioned above, to prolong a life of a battery of the battery power supply **24** as possible, each slave **Sij** performs intermittent reception. For example, the slave controller **20** repeats a count of a predetermined intermittent reception period (rest period) by use of a timer incorporated in its microcomputer. Each time the count of the intermittent reception period is completed, the slave controller **20** activates the wireless communicator **22** to check whether it is possible to receive a desired wave (e.g., a wireless signal sent from the master **Mi).** When not detecting the wireless signal, the slave controller **20** immediately deactivates the wireless communicator **22** and sets it in a waiting state. Therefore, average power consumption can be greatly reduced. Note that, check of whether a wireless signal can be received (i.e., carrier detection) is performed by the slave controller **20** based on a receiving signal strength indication signal (RSSI signal) defined as a DC voltage signal proportional to intensity of a received signal. For example, the slave controller **20** activates the wireless communicator **22** each time the rest period elapses. When activated, the wireless communicator **22** sends the receiving signal strength indication signal to the slave controller **20.** The slave controller **20** judges whether an electric wave is present, based on the receiving signal strength indicated by the receiving signal strength indication signal. For example, when the receiving signal strength is equal to a predetermined threshold (threshold for carrier detection) or more, the slave controller **20** concludes that an electric wave is present. When concluding that an electric wave is present, the slave controller **20** controls the wireless communicator **22** to start reception of the electric wave. According to this process, the slave **Sij** receives the electric wave. When the receiving signal strength is not greater than the predetermined threshold (threshold for carrier detection) until the predetermined waiting period elapses after the wireless communicator **22** is activated, the slave controller **20** concludes that no electric wave is present, and deactivates the wireless communicator **22.** Thereafter, the slave controller 20 starts the count of the rest period again.

Meanwhile, the master controller **10** of the master **Mi** broadcasts (multicasts) a wireless signal (a first wireless signal; a monitoring signal) including the periodic monitoring message periodically (e.g., at intervals of several hours or several tens of hours) via the wireless communicator **12.** In brief, the master **Mi** is configured to send the first wireless signal each time the predetermined waiting period elapses. In the present embodiment, the master **Mi** sends the wireless signal repeatedly in a master sending period T. In the present embodiment, the master sending period **T** is equal to the downlink period **DT.** However, the master sending period **T** may be shorter than the downlink period **DT.** With regard to the first wireless signal, the destination address **203** designates the broadcast address, and the sender address **204** designates the identifier of the master **Mi.** Accordingly, the slave **Sij** can receive the first wireless signal from the master **Mi** belonging to the different subsystem SSi. In brief, the first wireless signal can be received by the slave **Sij** belonging to the subsystem **SSi** different from the subsystem **SSi** to which the master **Mi** belongs.

With regard to each slave **Sij,** the slave controller **20** monitors at a preset interval (e.g., one hour) whether or not the sensor **23** fails and whether or not the battery of the battery power supply **24** runs out, and stores a monitoring result in a memory (not shown), for example. When receiving the periodic monitoring message (first wireless signal) from the master **Mi,** the slave controller **20** sends a wireless signal (a second wireless signal; a notification signal) including a notification message for announcing the monitoring result stored in the memory, to the master **Mi.** With regard to the second wireless signal, the destination address **203** designates the identifier of the master **Mi** belonging to the subsystem **SSi** same as the subsystem SSi to which the slave **Sij** belongs, and the sender address **204** designates the identifier of the slave **Sij.** For example, in the second wireless signal from the slave **S11,** the destination address **203** designates the identifier of the master **M1,** and the sender address **204** designates the identifier of the slave **S11.** Since the destination address **203** of the second wireless signal does not designate the broadcast address, the master Mi never receives the second wireless signal from the slave **Sij** belonging to the different subsystems **SSi.**

The master controller **10** of the master **Mi** sets the wireless communicator **12** in a receiving state to wait wireless signals (second wireless signals) sent from the respective slaves **Sij,** until a predetermined period elapses after the master controller **10** sends the wireless signal (first wireless signal) including the periodical monitoring message. When there is a slave **Sij** which the master **Mi** fails to receive the wireless signal (second wireless signal) including the notification message from before a lapse of the predetermined period, or when there is a slave **Sij** which provides the notification message including the monitoring result indicative of the occurrence of the abnormality, the master controller **10** produces a buzzer sound or the like to announce occurrence of abnormality and notifies the monitoring device **X** of the occurrence of the abnormality through a signal sent from the wired communicator **14.** It is presumed that the cause that the master **Mi** fails to receive the wireless signal (second wireless signal) including the notification message before a lapse of the predetermined period is a deterioration in a communication environment between the slave Sij and the master **Mi** (e.g., existence of an obstacle and occurrence of noises) in addition to a malfunction or running out of the slave **Sij**

The following explanation is made to a basic operation (operation executed when a fire occurs) of the fire alarm system of the present embodiment. For example, it is assumed that a fire occurs in a residence in which the subsystem SS3 is installed and that the slave S33 of the subsystem SS3 detects a fire. With regard to the slave S33 (hereinafter referred to as "fire origin slave **S33")** which has detected a fire, the slave controller 20 produces a warning sound via its speaker and sends the wireless signal including a message (alarming message) for announcing fire occurrence via the wireless communicator **22.** When the master **M3** receives the wireless signal sent from the fire origin slave **S33,** the master controller **10** of this master **M3** produces a warning sound via its speaker and sends the wireless signal including the alarming message via the wireless communicator **12** and additionally sends a signal including the alarming message via the wired communicator **14.** With regard to each of the slaves **S31** and **S32** which are not located in a fire origin, the slave controller **20** produces a warning sound via its speaker in response to reception of the wireless signal (wireless signal including the alarming message) sent from the fire origin slave **S33** or the master **M3.** Consequently, in the residence (residence at the fire origin) at which a fire occurs, all the fire alarming devices (the master **M3** and the slaves **S31** to **S33)** belonging to the subsystem **SS3** can cooperate to produce warning sounds.

Meanwhile, when receiving the signal sent from the master **M3** in the residence at the fire origin, the monitoring device **X** sends the signal including the alarming message via the signal line Ls to the masters **M1** and **M2** of the respective subsystems **SS1** and **SS2** which are installed in residences different from the residence at the fire origin. Note that, the monitoring device **X** may announce fire occurrence to a fire station (in the case of the security system, a control center of a company providing a security service) via a network such as an Internet, a public telephone network, and a mobile telephone network. With regard to each of the masters **M1** and **M2,** when the wired communicator **14** receives the signal sent from the monitoring device **X,** the master controller **10** produces a warning sound via its speaker and sends the wireless signal including the alarming message. Thus, all the slaves **S11** to **S13** and **S21** to **S23** belonging to the subsystems **SS1** and SS2 receive the wireless signals sent from the masters **M1** and **M2** respectively, and the slave controllers 20 produce warning sounds via their own speakers. Consequently, with regard to all the residences including the residences not located at the fire origin, all the fire alarming devices (the masters **M1** and **M2** and the slaves **S11** to **S13** and **S21** to **S23)** can cooperate to produce warning sounds.

As for a residential fire alarm system, there is no obligation by law to check the system periodically. However, in view of safety, it is recommended that such inspection is conducted a few times a month. In consideration of this recommendation, each subsystem SSi is designed to conduct inspection (operating test) automatically in response to instructions from the monitoring device **X.**

For example, when a controller performs a predetermined operation on the monitoring device **X,** the monitoring device **X** broadcasts the signal (inspection signal) including the message (inspection start message) for announcing start of inspection to the respective masters **Mi** via the signal line **Ls.** In brief, the monitoring device **X** is configured to send the inspection signal to the plural masters **Mi** in response to manipulation by a user.

With regard to the master **Mi** of each subsystem **SSi,** when receives the inspection start message from the above signal (inspection signal) via the wired communicator **14,** the master controller **10** starts the inspection (operating test). Note that, in this inspection (operating test), the basically same processes as those in the periodical monitoring conducted for each subsystem SSi are conducted. Concretely, the master controller 10 of the master **Mi** broadcasts the wireless signal (first wireless signal) including the inspection start message via the wireless communicator **12.**

The slave controller **20** of each slave **Sij** sends the signal, (second wireless signal) including the notification message for announcing the monitoring result stored in the memory, to the master **Mi,** in a similar manner as the process conducted by the slave controller **20** in response to reception of the periodical monitoring message.

The master controller **10** of the master **Mi** sets the wireless communicator **12** in the receiving state to wait the wireless signals (second wireless signals) sent from the respective slaves **Sij,** until a predetermined period elapses after the master controller **10** sends the wireless signal (first wireless signal) including the inspection start message (periodical monitoring message). When there is a slave **Sij** which the master **Mi** fails to receive the notification message from before a lapse of the predetermined period, or when there is a slave **Sij** which provides the notification message including the monitoring result indicative of the occurrence of the abnormality, the master controller **10** produces a buzzer sound or the like to announce occurrence of abnormality and notifies the monitoring device **X** of the occurrence of the abnormality through a signal sent from the wired communicator **14.**

For example, when each master **Mi** sends the wireless signal (first wireless signal) including the inspection start message (periodical monitoring message) simultaneously (at the same time), there is a possibility that interference between the wireless signals of the subsystems **SSi** installed in adjacent residences occurs and the slaves **Sij** in such subsystems **SSi** fail to receive the wireless signal normally. Further, when the slave **Sij** of each subsystem **SSi** sends the wireless signal (second wireless signal) to the master **Mi** in the sending period (uplink period) **UT,** interference between the wireless signals (second wireless signals) of the subsystems **SSi** at adjacent residences is likely to occur. In view of this insufficiency, according to the present embodiment, to prevent such interference, the masters **Mi** and the slaves **Sij** respectively send the wireless signals via the frequency channels which are respectively allocated to the subsystems **SSi** and different from each other.

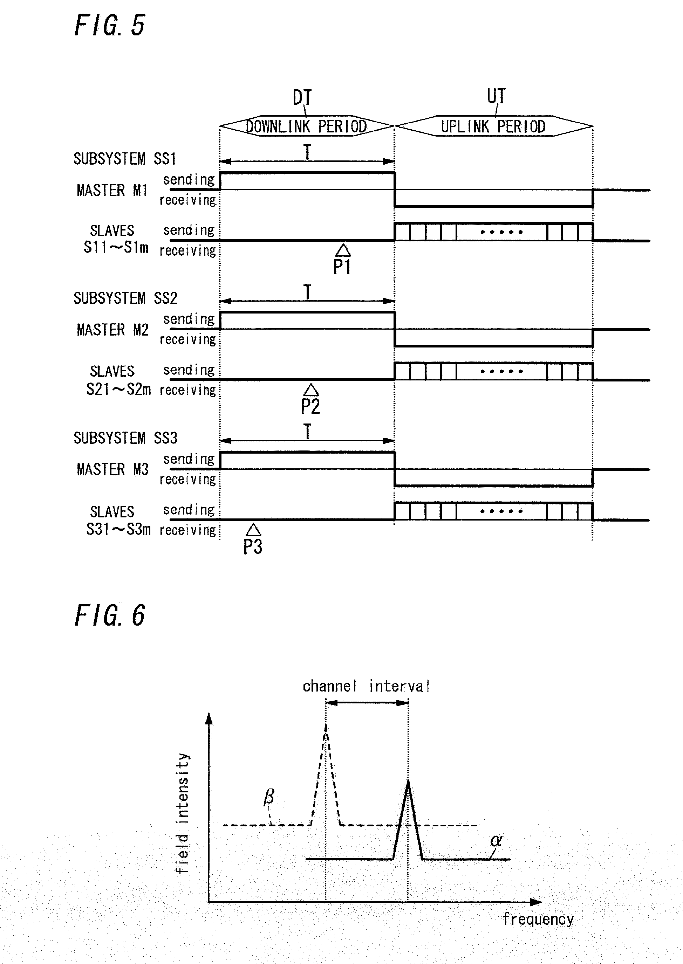

Further, in the present embodiment, as shown in **FIG. 5****,** the slave **Sij** of each subsystem **SSi** sends (returns) the wireless signal (wireless signal including the notification message) to the master **Mi** using time-division multiplexing. Thus, interference between the wireless signals (second wireless signals) sent from the slaves **Sij** can be avoided as possible. Particularly, the sending period (uplink period) **UT** is divided into plural time slots (hereinafter, referred to as "slots") while the number of slots is selected not less than the number of slaves **Sij.** With regard to each subsystem **SSi,** the master **Mi** allocates the slots to the slaves **Sij** one by one such that the same slot is not allocated to the different slaves **Sij.** In other words, the master **Mi** is configured to prepare the plural time slots in the second period (uplink period) **UT.** The master **Mi** is configured to respectively allocate the time slots to the slaves **Sij** included in the subsystem SSi to which the master **Mi** belongs. Especially in the present embodiment, each of the plural subsystems **SSi** has the same number of time slots, and the time slots of the different subsystems **SSi** are synchronized with each other. Further, the common (same) slot number is given to the time slots synchronized with each other.

For example, the plural slots are given slot numbers of 1, 2, ..., to in order from the first. In this case, allocated to each slave **Sij** is a slot number identical to a slave number "j" of an identifier given thereto. Accordingly, when the sending period associated with the slave **Sij** starts, in order from the slave **Si1** having the slave number of **1**, the slave controller **20** sends the wireless signal by use of the slot having the slot number allocated thereto. Consequently, it is possible to prevent interference between the wireless signals (second wireless signals) from the slaves **Sij** belonging to the same subsystem **SSi** (see **FIG. 5****).** However, a method of replying from the slave **Sij** to the master **Mi** is not limited to the time-division multiplexing, but may be another method such as carrier sense multiple access.

As mentioned above, the slave **Sij** of each subsystem **SSi** performs the intermittent reception. In this case, even when the frequency channels are different, the wireless signal (first wireless signal) sent from the master **Mj** of the different subsystem **SSj** causes the slave Sij of the subsystem SSi to activate the wireless communicator **22** to be in the receiving state. In other words, the slave **Sij** is likely to receive the wireless signal sent from the master **M1** of the different subsystem **SSi.** For example, it is assumed that a distance between the slave **S11** and the master **M2** of the other subsystem **SS2** is considerably shorter than a distance between the slave **S11** and the master **M1** of the same subsystem **SS1.**

**FIG. 6** shows field intensities of the wireless signals (first wireless signals) received by the wireless communicator **22** of the slave **S11**, and a solid line a represents the filed intensity of the wireless signal (first wireless signal) sent from the master **M1** belonging to the same subsystem **SS1**, and a broken line **ß** represents the field intensity of the wireless signal (first wireless signal) sent from the master **M2** belonging to the other subsystem **SS2.**

Since a channel interval between the frequency channels of these two kinds of the wireless signals is relatively small, a difference between the field intensity (electrical power) regarding the frequency channel of the subsystem **SS1** and adjacent channel leakage power regarding the frequency channel of the subsystem **SS2** is relatively small. As a result, there is a probability that as for the wireless communicator **22** of the slave **S11** a reception level (a value of the RSSI signal, that is, the receiving signal strength indication) of the wireless signal sent from the master **M2** of the adjacent subsystem SS2 is equal to the threshold or more. In this case, the wireless communicator **22** of the slave **S11** is likely to receive the wireless signal from the adjacent subsystem **SS2** which the wireless communicator **22** of the slave **S11** need not receive in a normal situation, and energy stored in a battery thereof may be consumed. Note that, with regard to not only a wireless signal from the adjacent subsystem **SS2** but also a wireless signal sent from a wireless device in an entirely-different system, the reception level of such a wireless signal is likely to equal to the threshold or more. Therefore, reception of such an unnecessary wireless signal (or a noise) is likely to cause a slave to miss an opportunity to receive the wireless signal which should be received in a normal state.

According to the present embodiment, there are many cases where the wireless signal including the message having the same content is sent and received in each subsystem **SSi.** For example, the inspection start message (or the periodic monitoring message) should be received by the slaves Sij of all the subsystems SSi. When receiving the wireless signal sent from the master **Mj** of the different subsystem SSj and obtaining the inspection start message, the slave **Sij** of the subsystem **SSi** does not need to receive again the same inspection start message from the master **Mi** of the same subsystem **SSi.** Meanwhile, in view of a life of the battery, receiving electric waves (noises) other than the wireless signals from the other subsystems **SSj** should be avoided as possible.

Accordingly, in the present embodiment, as shown in **FIG. 4****,** the master controller **10** of the master **Mi** divides the original data (the destination address **203,** the sender address **204,** the message **205,** and the check code **206)** into plural sets of data bits constituted by eight bits (one byte), and interposes synchronization bit pattern Sync (01010101) between the adjacent sets of data bits constituted by one byte to form the wireless signal (first wireless signal). In brief, the first wireless signal includes the predetermined bit pattern (synchronization bit pattern). For example, the first wireless signal is formed by means of modulating a carrier with a bit sequence including the synchronization bit pattern. This bit sequence represents the synchronization bit **201,** the frame synchronization pattern **202,** the destination address **203,** the sender address **204,** the message **205,** and the check code **206,** and is obtained by encoding the message **205.** The synchronization bit pattern Sync is, for example, defined as a bit sequence of eight bits (one byte) in which "0" and "1" are arranged alternately. When detecting the synchronization bit pattern from the bit sequence obtained by demodulating the wireless signal (first wireless signal) by the wireless communicator **22,** the slave controller **20** of the slave **Sij** obtains predetermined information (inspection start message) from the bit sequence, and when not detecting the synchronization bit pattern, the slave controller **20** of the slave Sij changes the frequency channel of the wireless communicator **22.**

In brief, the wireless device (slave) **Sij** of the present embodiment includes: the receiving unit (wireless communicator) **22** configured to receive the wireless signal (fires wireless signal) and obtain a bit sequence by demodulating the received wireless signal (first wireless signal); the detecting unit (slave controller) **20** configured to detect presence of the predetermined bit pattern from the obtained bit sequence; the changing unit (slave controller) **20** configured to, when the detecting unit fails to detect the bit pattern, change the frequency channel for the receiving unit; and the information acquiring unit (slave controller) **20** configured to, when the detecting unit detects the bit pattern, acquire information from the bit sequence.

In other words, the wireless device (slave) **Sij** of the present embodiment includes the changing unit (slave controller) **20,** the receiving unit (wireless communicator) **22,** the detecting unit (slave controller) **20,** and the information acquiring unit (slave controller) **20.** The changing unit is configured to select one from plural frequency channels prepared. The receiving unit is configured to receive an electric wave via the frequency channel selected by the changing unit and designed to, when receiving the electric wave, demodulate the electric wave to obtain the bit sequence. The detecting unit is configured to: check whether the bit sequence obtained by the receiving unit has a predetermined bit pattern; and conclude that the received electric wave is identical to an intended wireless signal including predetermined information when the bit sequence has the predetermined bit pattern; and conclude that the received electric wave is not identical to the intended wireless signal when the bit sequence does not have the predetermined bit pattern. The information acquiring unit is configured to, when the detecting unit concludes that the received electric wave is identical to the intended wireless signal, decode the bit sequence to acquire the predetermined information. The changing unit is configured to, when the detecting unit concludes that the received electric wave is not identical to the intended wireless signal, select from the plural frequency channels a frequency channel different from the previously selected frequency channel.

Consequently, the slave **Sij** can obtain the information (e.g., the inspection start message and the periodical monitoring message) which the slave **Sij** should receive normally, from the different subsystem **SSj** in addition to the subsystem **SSi** to which the slave **Sij** belongs. Even when interference between the wireless signals (first wireless signals) occurs, it is possible to receive the information transmitted by such wireless signals (first wireless signals).

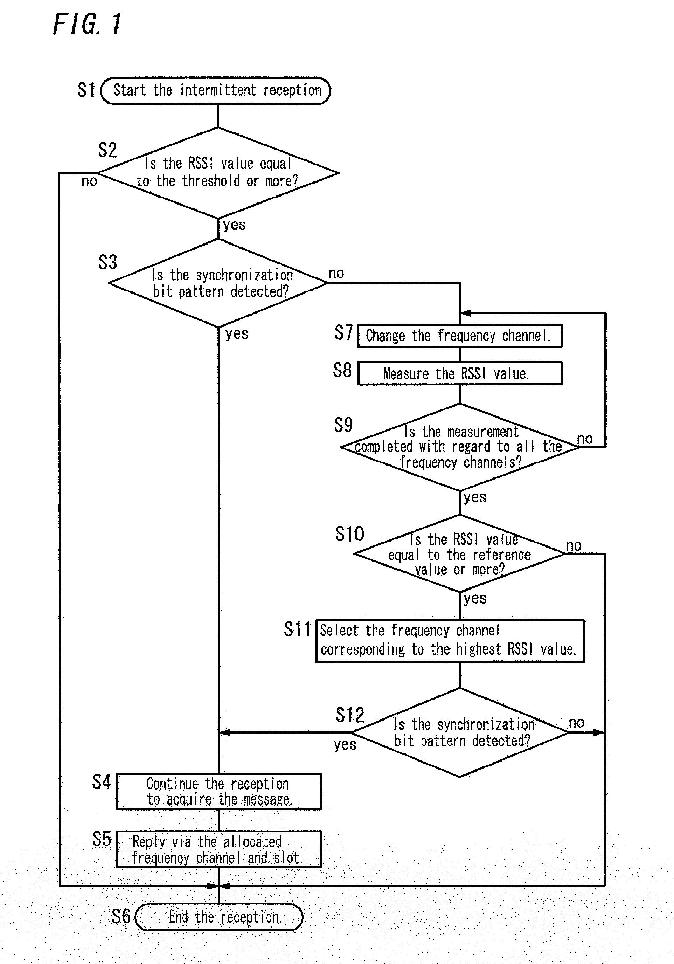

The following explanation referring to a flowchart shown in **FIG. 1** is made to an operation of the slave (wireless device) **Sij** of the present embodiment.

In the initial state, the slave controller (changing unit) **20** selects, from the plural frequency channels prepared, a frequency channel allocated to the corresponding subsystem **SSi.**

At the time of completion of the count of the intermittent reception period (rest period), the slave controller **20** of the wireless device **Sij** activates the wireless communicator **22** and sets the same in a reception waiting state (step **S1**).

When detecting an electric wave (wireless signal), the wireless communicator **22** measures the value of the RSSI signal (hereinafter, referred to as "RSSI value") of the detected electric wave (wireless signal) and provides the measurement to the slave controller **20.** The slave controller **20** compares the RSSI value (receiving signal strength) with the predetermined threshold (step **S2).** When the RSSI value is less than the threshold, the slave controller **20** deactivates the wireless communicator **22** to end the reception waiting state (step **S6**) and starts the count of the intermittent reception period (rest period).

Meanwhile, when the RSSI value is equal to the threshold or more, the slave controller **20** has the wireless communicator **20** continue the reception operation. In other words, when the RSSI value (signal level) is equal to the threshold or more, the slave **Sij** concludes that an electric wave is present, and then the slave **Sij** starts to receive the electric wave. Hence, the slave Sij receives the electric wave (wireless signal). The wireless communicator **22** demodulates the received wireless signal to obtain the bit sequence from the wireless signal and provides the obtained bit sequence to the slave controller **20.** The slave controller **20** checks whether the bit sequence obtained by demodulation by the wireless communicator **22** has the synchronization bit pattern (step **S3**). When detecting the synchronization pattern, the slave controller **20** has the wireless communicator **22** continue the reception operation, thereby obtaining the message (the periodic monitoring message or the inspection start message) (step **S4**).

When not detecting the synchronization pattern, the slave controller **20** has the wireless communicator **22** select the different frequency channel (step **S7**) and measure the **RSSI** value of the electric wave (wireless signal) received via the selected frequency channel (step **S8**). Note that, the slave controller **20** has the wireless communicator **22** measure the RSSI value with regard to all the frequency channels which are allowed to be selected (all the frequency channel other than currently selected frequency channel), and stores the measurement values (RSSI values) in its memory (steps **S7** to **S9**). Further, the slave controller **20** compares with a reference value a maximum out of the RSSI values of all the frequency channels stored in the memory (step **S10**). When the maximum is less than the reference value, the slave controller **20** deactivates the wireless communicator **22** to end the receiving state (step **S4**) and subsequently starts the count of the intermittent reception period.

Meanwhile, when the maximum of the RSSI value is equal to the reference value or more, the slave controller **20** selects as the frequency channel of the wireless communicator **22** the frequency channel having the maximum of the RSSI value (step **S11**), and has the wireless communicator **22** receive the wireless signal (first wireless signal) via the newly selected frequency channel. Thus, the wireless communicator **22** obtains the bit sequence by demodulating the received wireless signal (first wireless signal) and provides the obtained bit sequence to the slave controller **20.** The slave controller **20** checks whether the bit sequence obtained by demodulation by the wireless communicator **22** has the synchronization bit pattern (step **S12).** When detecting the synchronization pattern, the slave controller 20 has the wireless communicator 20 continue the reception operation, thereby obtaining the message (the periodic monitoring message or the inspection start message) (step **S4**). When not detecting the synchronization pattern, the slave controller 20 deactivates the wireless communicator **22** to end the receiving state (step **S6**) and subsequently starts the count of the intermittent reception period.

When receiving the wireless signal (first wireless signal) and acquiring the message (the periodical monitoring message or the inspection start message), the slave controller 20 sends the wireless signal (second wireless signal) as a reply to the master **Mi** of the same subsystem SSi via the wireless communicator **22** by use of the originally allocated frequency channel (the frequency channel initially allocated to the subsystem **SSi)** and the slot (step **S5**).

Unless a reply from the slave **Sij** to the master **Mi** is sent via the frequency channel and the slot selected for the original subsystem **SSi**, such a reply is likely to be interfered with the wireless signal sent from the slave **Sjk** of the different subsystem **SSj.**

Accordingly, it is preferable that the wireless device **Sij** include the sending unit configured to send the wireless signal via the predetermined frequency channel out of the selectable frequency channels. In other words, the wireless device Sij includes the sending unit (wireless communicator) **22** configured to send a wireless signal via the predetermined frequency channel. Note that, in the present embodiment, the slave controller **20** serves as the detecting unit, the changing unit, and the information acquiring unit, and the wireless communicator **22** serves as the receiving unit and the sending unit.

In this regard, as mentioned above, the slave controller **20** checks the signal level (RSSI value) of the wireless signal received by the wireless communicator **22** with regard to all the frequency channels which are allowed to be selected, and selects as the frequency channel for the wireless communicator **22** the frequency channel having the highest RSSI value.

In other words, in this wireless device **Sij,** the changing unit checks the signal level of the wireless signal received by the receiving unit with regard to all the selectable frequency channels, and selects as the frequency channel for the receiving unit the frequency channel having the highest RSSI value. In other words, the receiving unit (wireless communicator) **22** is configured to, when detecting an electric wave in the frequency channel selected by the changing unit (slave controller) **20,** measure the signal level (the RSSI value, in the present embodiment) of the detected electric wave. The changing unit (slave controller) **20** is configured to, when the detecting unit (slave controller) **20** concludes that the received electric wave is not identical to the intended wireless signal, select one from the plural frequency channels other than the previously selected frequency channel in sequence to acquire the signal levels of the respective plural frequency channels other than the previously selected frequency channel from the receiving unit (wireless communicator) **22.** The changing unit (slave controller) **20** is configured to refer to the signal levels acquired from the receiving unit (wireless communicator) **20** and select the frequency channel corresponding to the electric wave having the highest signal level.

Consequently, it is possible to more successfully receive the message (information) sent from the master **Mi.**

Further, with regard to the wireless communicator **22**, it is preferable that the threshold for carrier detection used for the frequency channel allocated to the different subsystem **SSj** to which the wireless communicator **22** does not belong be greater than the threshold (threshold compared with the RSSI value) for carrier detection used for the frequency channel allocated to the subsystem SSi to which the wireless communicator **22** belongs.

In other words, in this wireless device **Sij**, it is preferable that the receiving unit have the thresholds for carrier detection associated with the frequency channels other than the predetermined frequency channel be greater than the threshold for carrier detection associated with the predetermined threshold out of the selectable frequency channels. In other words, the receiving unit (wireless communicator) **22** is configured to, when detecting an electric wave in the frequency channel selected by the changing unit (slave controller) **20,** measure the signal level of the detected electric wave. The receiving unit (wireless communicator) **22** is configured to, when the measured signal level is not less than the threshold for carrier detection, start to receive the detected electric wave. The plural frequency channels are respectively corresponding to the thresholds. The plural frequency channels include the predetermined frequency channel corresponding to the preliminarily associated wireless device (master) **Mi.** The predetermined frequency channel is defined as a frequency channel allocated to the subsystem SSi to which the wireless device **Sij** belongs. The threshold corresponding to the predetermined frequency channel is the lowest. In brief, a probability that the electric wave detected by the wireless communicator **22** is judged to be the first wireless signal is higher in the frequency channel allocated to the subsystem **SSi** to which the wireless device Sij belongs, relative to the other frequency channels.

Hence, it is possible to reduce a probability that a noise of a high field intensity such as an electromagnetic wave noise emitted from an electric appliance in a residence is received by mistake.

When the sending periods in which the slaves Sij of the respective subsystem SSi send (return) the wireless signals (second wireless signals) are overlapped with each other, interference between the wireless signals of the respective subsystems SSi is likely to occur even when the frequency channels are different from each other.
For example, it is assumed that a distance between the master **M1** and the slave **S21** of the different subsystem **SS2** is considerably shorter than a distance between the master **M1** and the slave **S11** of the same subsystem **SS1**. As already described above, since a channel interval between the frequency channels of these two kinds of the wireless signals is relatively small, a difference between the field intensity (electrical power) regarding the frequency channel of the subsystem **SS1** and adjacent channel leakage power regarding the frequency channel of the subsystem **SS2** is relatively small. As a result, the wireless communicator **12** of the master **M1** is likely to suffer from interference between the wireless signal of the slave **S11** and the wireless signal sent from the slave **S21** of the adjacent subsystem **SS2,** and fail to receive the wireless signal of the slave **S11** which the wireless communicator **12** should receive normally.

In such a case, the master controller **10** of the master **M1** sends the wireless signal (first wireless signal) again to the slave **S11** which fails to receive the wireless signal. At this time, the master **M2** in the different subsystem SS2 sends no wireless signal, and the slave **S21** returns no wireless signal. Consequently, the wireless signal returned by the slave **S11** can be successfully received by the wireless communicator **12** of the master **M1**. In this manner, with resending the wireless signal, the master **M1** can receive the wireless signal from the slave **S11** which fails to receive the wireless signal which is sent first. However, also in the next inspection or later, there is a high probability that interference between the wireless signals occur.

In this regard, the aforementioned interference between the wireless signals occurs only when the slots (slot numbers) allocated to the two slaves **S11** and **S21** are overlapped with each other. Therefore, according to a configuration where the slot allocated to the slave **S11** of the subsystem **S11** is changed such that the slots of the two slaves **S11** and **S21** are not overlapped with each other when the aforementioned interference between the wireless signals occurs, it is presumed that the interference between the wireless signals can be avoided at a high probability in the next inspection or later. In other words, when the field intensity of the wireless signal, which should be received normally, sent from the slave **S1j** is increased, effects caused by such interference can be reduced and the intended wireless signal can be successfully received even when there is no change in the field intensity of the interfering wireless signal (wireless signal sent from the slave **S21).**

In summary, the wireless communication system described in the present embodiment includes the plural subsystems **SSi** each including the slave **Sij** and the master **Mi** configured to perform wireless communication with this slave **Sij.** The masters **Mi** of the respective subsystems **SSi** are configured to perform wired communication with each other. In each subsystem **SSi,** each of the plural slaves **Sij** belonging to this subsystem **SSi** sends the wireless signal (second wireless signal) via the time slot allocated to this slave **Sij** by a master **Mi,** out of the plural time slots into which the sending period (uplink period) UT is divided, and when failing to receive the wireless signal (second wireless signal) via any one of time slots, the master **Mi** belonging to this subsystem **SSij** allocates another time slot to the slave **Sij** corresponding to the time slot causing this master **Mi** to fail to receive the wireless signal (second wireless signal).

In other words, the wireless communication system in the present embodiment includes the plural subsystems **SSi.** Each of the plural subsystems **SSi** includes: a sole master **Mi;** and a slave (wireless device) **Sij** configured to communicate with the master **Mi.** The mutually different frequency channels are respectively allocated to the plural subsystems **SSi.** The master **Mi** is configured to perform wireless communication with the slave **Sij** via the frequency channel allocated to the subsystem SSi to which the master **Mi** belongs. The master **Mi** is configured to send the first wireless signal in the first period (downlink period) **DT** common to the plural subsystems **SSi** and wait the second wireless signal in the second period (uplink period) **UT** which is common to the plural subsystems **SSi** and is subsequent to the first period (downlink period) **DT.** The slave **Sij** is configured to send the second wireless signal in the second period (uplink period) **UT** in response to reception of the first wireless signal. The master **Mi** is configured to prepare the plural time slots in the second period (uplink period) **UT.** The master **Mi** is configured to allocate the time slot to the slave **Sij** included in the subsystem **SSi** to which this master **Mi** belongs. The slave **Sij** is configured to send the second wireless signal to the master **Mi** by use of the allocated time slot. The master **Mi** is configured to judge whether a no-reply slave exists with regard to the slave **Sij** included in the subsystem **SSi** to which this master **Mi** belongs. The no-reply slave is defined by the slave **Sij** that sends the second wireless signal which the master **Mi** fails to receive. The master **Mi** is configured to, when concluding that the no-reply slave exists, change the time slot for the no-reply slave to a different time slot.

The following explanation is made to a process in which the master controller 10 of the master **M1** changes the slot allocated to the slave **S1j**.

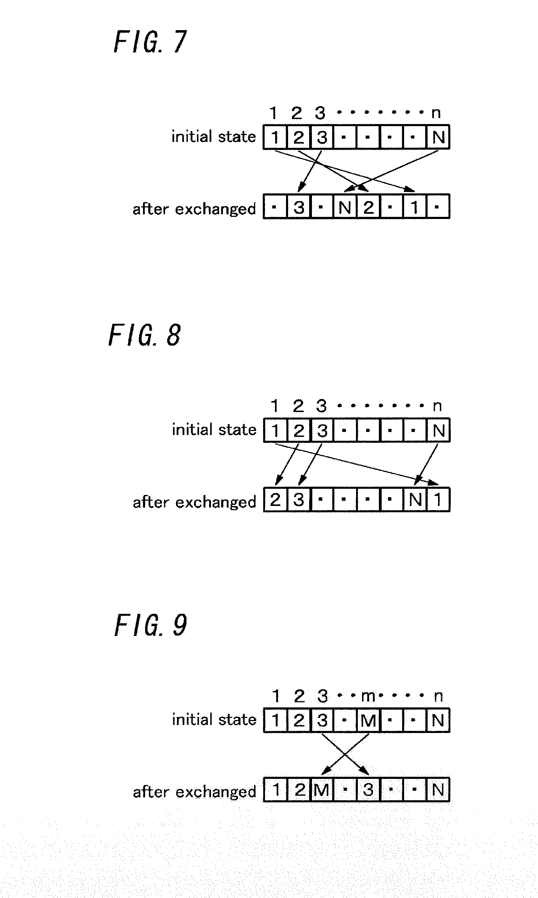

For example, as shown in **FIG. 7****,** in the initial state, the slots are allocated such that the slot numbers of 1 to n are respectively corresponding to the slave numbers of 1 to N. The slave controller **20** generates a random number and randomly reallocates the slot numbers to the slave numbers.

In summary, in this wireless communication system, it is preferable that the master **Mi** randomly change the time slot allocated to the slave **Sij.** In other words, the master **Mi** is configured to randomly select the different slot from the plural time slots.

Alternatively, as shown in **FIG. 8****,** the master **Mi** may shift the slot numbers one by one such that the slot numbers of 2 to N and 1 are respectively allocated to the slave numbers of 1 to N (the master **Mi** may select the slot adjacent to the initial slot as a new slot).

In summary, it is preferable that the master **Mi** change the time slot allocated to the slave Sij to a different time slot adjacent thereto. In other words, the master Mi is configured to select, as the different time slot, the time slot adjacent to the time slot allocated to the no-reply slave.

Alternatively, as shown in **FIG. 9****,** the slots may be exchanged between the slave S13 which fails to receive the wireless signal and the slave **S1M** which successfully receives the wireless signal.

In brief, in this wireless communication system, it is preferable that the master **Mi** exchange the time slot for the slave Sij and the time slot for the slave **Sij** that sends the wireless signal which the master **Mi** successfully receives. In other words, the master **Mi** is configured to, when concluding that the no-reply slave exists, exchange the time slot for the no-reply slave and the time slot allocated to the slave Sij that sends the second wireless signal which the master **Mi** successfully receives.

In this case, it is preferable that the slot be exchanged for the slot allocated to the slave **S1j** corresponding to the highest value of the RSSI signal of the received wireless signal out of the slaves **S1j** which successfully receive the wireless signals.

In brief, in this wireless communication system, it is preferable that the master **Mi** exchange the time slot for the slave **Sij** and the time slot for the slave **Sij** corresponding to the highest reception level of the wireless signal out of the slaves **Sij** that send the wireless signals which the master **Mi** successfully receives. In other words, the master **Mi** is configured to, when concluding that the no-reply slave exists, exchange the time slot for the no-reply slave and the time slot allocated to the slave **Sij** associated with the second wireless signal having the highest reception level.

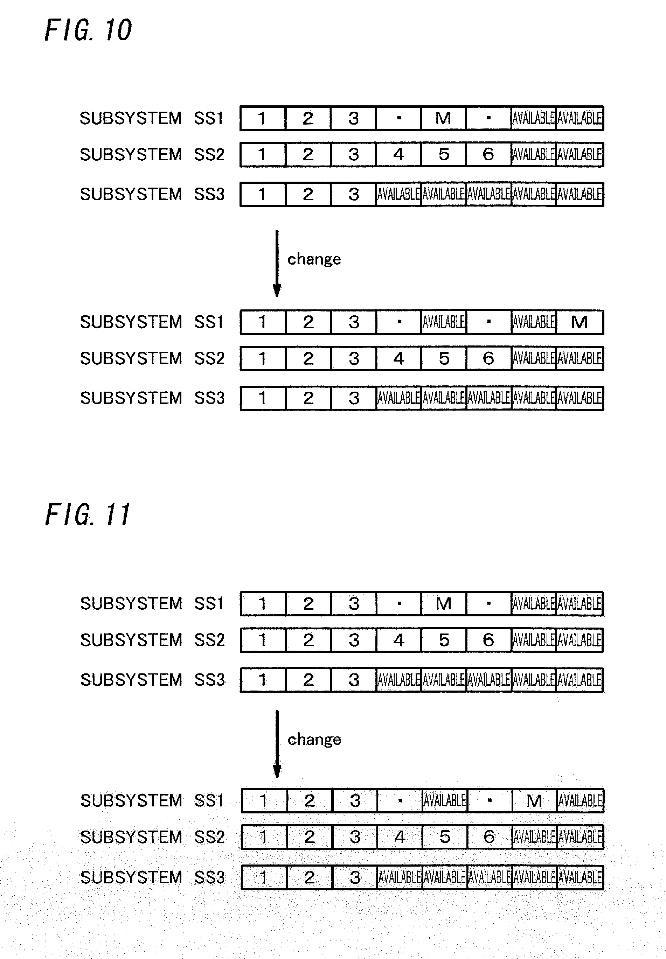

Further, in a particular case, the number of slaves **Sij** in the subsystem **SSi** is less than the number of slots, and the sequential slots are respectively allocated to the slaves **Sij** in order from the first slot (see **FIG. 10** and **FIG. 11****).** Especially, in the case shown in **FIG. 10** and FIG. **11**, the plural subsystems SSi have the same number of the time slots and the time slots of the different subsystems SSi are synchronized with each other.

In such a case, for example, when failing to receive the wireless signal from the slave **S1M** having the slave number of M in the subsystem **SS1**, the master controller 10 of the master **M1** may change the slot for the slave **S1M** to an available slot which is not allocated to any slave **Sij** (see **FIG. 10****).**

In brief, in this wireless communication system, it is preferable that the number of slaves **Sij** in the subsystem **SSi** be less than the number of slots, and that the sequential slots be respectively allocated to the slaves **Sij** in order from the first slot, and that the master **Mi** change the slot for the slave **Sij** to the available slot which is not allocated to any slave **Sij.** In other words, the plural time slots include a spare time slot (available slot) which is not allocated to any slave **Sij.** The master **Mi** is configured to select the spare time slot as the different time slot.

Further, in a case where there are some available slots, as shown in **FIG. 11****,** it is preferable that an available slot which is not overlapped with the slots respectively allocated to the slaves **S2j** and **S3j** of the different subsystems **SS2** and **SS3** be selected.

In brief, in this wireless communication system, it is preferable that the number of slaves **Sij** in the subsystem **SSi** be less than the number of slots, and that the sequential slots be respectively allocated to the slaves **Sij** in order from the first slot, and that the master **Mi** change the time slot for the slave Sij to the available slot which is not overlapped with the slots respectively allocated to the slaves Sij of the different subsystems. In other words, the master **Mi** is configured to judge whether non-electric-wave period is present in the second period (uplink period) **UT,** the non-electric-wave period being defined as a period in which any slave **Sij** in other subsystems SSi sends no second wireless signal. The master **Mi** is configured to, when concluding that the non-electric-wave period is present in the second period **UT,** select the time slot corresponding to the non-electric-wave period as the different time slot. For example, the master **Mi** notifies the other masters **Mi** of the numbers of the time slots allocated to the slaves **Sij** via the communication line **Ls.** The master **Mi** determines that the time slot not allocated to any slave **Sij** is the time slot corresponding to the non-electric-wave.

Meanwhile, for a case where there is no available slot mentioned above, each master **Mi** measures the reception level (the value of the RSSI signal) of the wireless signal sent from the slave **Sij** of the different subsystem **SSi** in advance. It is preferable that a slot overlapped with a slot having a relatively low reception level be selected when changing the allocated slot is required.

In this wireless communication system, it is preferable that the master exchange the time slot for the slave and the time slot having the highest reception level of the wireless signal out of the times slots which enables the master to successfully receive the wireless signals.

In brief, in this wireless communication system, it is preferable that the master **Mi** measure the reception level of the wireless signal which the slave **Sij** of another subsystem sends via the time slot allocated to this slave **Sij.** Further, it is preferable that, when there is a slave **Sij** by which the master **Mi** fails to receive the wireless signal sent, the master **Mi** change the time slot for this slave **Sij** to the time slot overlapped with the time slot corresponding to the relatively low reception level. In other words, the master **Mi** is configured to measure the reception level of the second wireless signal from the slave **Sij** belonging to another subsystem SSi in the second period (uplink period) **UT.** The master **Mi** is configured to judge whether a low electrical wave period in which the measured reception level is not greater than a predetermined threshold is present in the second period (uplink period) **UT.** The master **Mi** is configured to, when concluding that the low electrical wave period is present in the second period (uplink period) **UT,** select the time slot corresponding to the low electrical wave period as the different time slot.

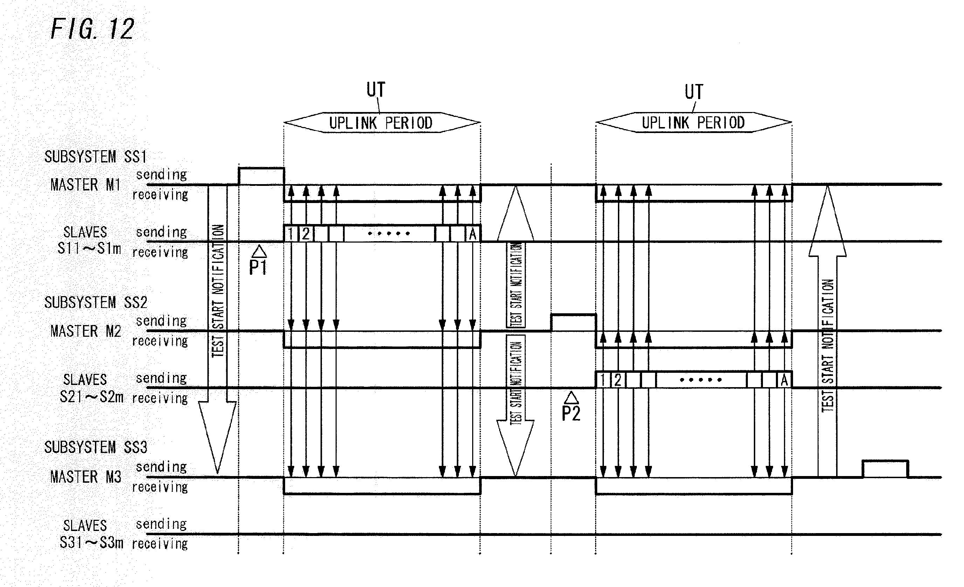

For example, when the system is activated after completion of installation thereof, as shown in **FIG. 12****,** the master **M1** of the subsystem **SS1** sends to other masters **Mi** a signal including a message for announcing start of a test to the other masters **M1** and **M2** via the signal lines Ls, and the test is started. First, the wireless communicator **12** of the master **M1** broadcasts the wireless signal, and the slave **S1j** which has received this wireless signal returns (sends) a wireless signal by using the time-division multiplexing. With regard to each the different masters **M2** and **M3,** the wireless communicator 12 is set in the receiving state to measure the reception level for each slot in the subsystem **SS1,** and the master controller 10 stores the measurement values (RSSI value) respectively associated with the slot numbers in its memory.

Next, the wireless communicator **12** of the master **M2** broadcasts the wireless signal, and the slave **S2j** which has received this wireless signal returns (sends) a wireless signal by using the time-division multiplexing. With regard to each of the different masters **M1** and **M3,** a wireless communicator **12** is set in the receiving state to measure the reception level for each slot in the subsystem **SS2,** and a master controller 10 stores the measurement values (RSSI value) respectively associated with the slot numbers in its memory. Finally, the wireless communicator **12** of the master **M3** broadcasts the wireless signal, and the slave **S3j** which has received this wireless signal returns (sends) a wireless signal by using the time-division multiplexing. With regard to each of the different masters **M1** and **M2**, a wireless communicator **12** is set in the receiving state to measure the reception level for each slot in the subsystem **SS3,** and a master controller **10** stores the measurement values (RSSI value) respectively associated with the slot numbers in its memory. However, there is no need to store the measurement values of the reception level of all the slots in a memory. For example, only the slot number associated with the smallest measurement value or the slot number associated with the measurement value not less than the predetermined threshold may be stored in a memory.

When a degree of interference between the wireless signals for each slot, that is, the reception level of the wireless signal sent from the slave **Sij** of the different subsystem SSi is measured in advance, the master controller **10** can select the slot with the lowest reception level or the slot with the reception level not greater than the threshold, at the time of changing the allocated slots. Hence, the interference between the wireless signals can be avoided. Note that, when the measurement values of all the slots are stored in the memory of the master controller **10,** the slot can be selected in the order from the slot corresponding to the lowest measurement value of the reception level when the interference between the wireless signals occurs with regard to some of the plural slots.

## Claims

1. A wireless device comprising:
a changing unit configured to select one from plural frequency channels prepared;
a receiving unit configured to receive an electric wave via the frequency channel selected by the changing unit and designed to, when receiving the electric wave, demodulate the electric wave to obtain a bit sequence;
a detecting unit configured to: check whether the bit sequence obtained by the receiving unit has a predetermined bit pattern; and conclude that the received electric wave is identical to an intended wireless signal including predetermined information when the bit sequence has the predetermined bit pattern; and conclude that the received electric wave is not identical to the intended wireless signal when the bit sequence does not have the predetermined bit pattern; and
an information acquiring unit configured to, when the detecting unit concludes that the received electric wave is identical to the intended wireless signal, decode the bit sequence to acquire the predetermined information,
wherein
the changing unit is configured to, when the detecting unit concludes that the received electric wave is not identical to the intended wireless signal, select from the plural frequency channels a frequency channel different from the previously selected frequency channel.

2. The wireless device as set forth in claim 1, wherein:
the receiving unit is configured to, when detecting an electric wave in the frequency channel selected by the changing unit, measure a signal level of the detected electric wave;
the changing unit is configured to, when the detecting unit concludes that the received electric wave is not identical to the intended wireless signal, select one from the plural frequency channels other than the previously selected frequency channel in sequence to acquire the signal levels of the respective plural frequency channels other than the previously selected frequency channel from the receiving unit; and
the changing unit is configured to refer to the signal levels acquired from the receiving unit and select the frequency channel corresponding to the electric wave having the highest signal level.

3. The wireless device as set forth in claim 1, wherein:
the receiving unit is configured to, when detecting an electric wave in the frequency channel selected by the changing unit, measure a signal level of the detected electric wave;
the receiving unit is configured to, when the measured signal level is not less than a threshold for carrier detection, start to receive the detected electric wave;
the plural frequency channels are respectively corresponding to the thresholds;
the plural frequency channels include a predetermined frequency channel corresponding to a preliminarily associated wireless device;
the threshold corresponding to the predetermined frequency channel is the lowest.

4. The wireless device as set forth in claim 3, wherein
the wireless device further comprises a sending unit configured to send a wireless signal via the predetermined frequency channel.

5. A wireless communication system comprising plural subsystems,
wherein:
each of the plural subsystems comprises: a sole master; and a slave configured to communicate with the master;
mutually different frequency channels are respectively allocated to the plural subsystems;
the master is configured to perform wireless communication with the slave via the frequency channel allocated to the subsystem to which the master belongs;
the master is configured to send a first wireless signal in a first period common to the plural subsystems and wait a second wireless signal in a second period which is common to the plural subsystems and is subsequent to the first period;
the first wireless signal has a predetermined bit pattern;
the slave is defined by the wireless device according to any one of claims 1 to 4;
the slave is configured to send the second wireless signal in the second period in response to reception of the first wireless signal;
the master is configured to prepare plural time slots in the second period;
the master is configured to allocate the time slot to the slave included in the subsystem to which the master belongs;
the slave is configured to send the second wireless signal to the master by use of the allocated time slot;
the master is configured to judge whether a no-reply slave exists with regard to the slave included in the subsystem to which the master belongs;
the no-reply slave is defined by the slave that sends the second wireless signal which the master fails to receive; and
the master is configured to, when concluding that the no-reply slave exists, change the time slot for the no-reply slave to a different time slot.

6. The wireless communication system as set forth in claim 5, wherein
the master is configured to, when concluding that the no-reply slave exists, exchange the time slot for the no-reply slave and the time slot allocated to the slave that sends the second wireless signal which the master successfully receives.

7. The wireless communication system as set forth in claim 5, wherein:
the plural time slots include a spare time slot which is not allocated to any slave; and
the master is configured to select the spare time slot as the different time slot.

8. The wireless communication system as set forth in claim 5, wherein:
the master is configured to judge whether non-electric-wave period is present in the second period, the non-electric-wave period being defined as a period in which any slave in other subsystems sends no second wireless signal; and
the master is configured to, when concluding that the non-electric-wave period is present in the second period, select the time slot corresponding to the non-electric-wave period as the different time slot.

9. The wireless communication system as set forth in claim 5, wherein:
the master is configured to measure a reception level of the second wireless signal; and
the master is configured to, when concluding that the no-reply slave exists, exchange the time slot for the no-reply slave and the time slot allocated to the slave associated with the second wireless signal having the highest reception level.

10. The wireless communication system as set forth in claim 5, wherein:
the master is configured to measure a reception level of the second wireless signal from the slave belonging to another subsystem in the second period;
the master is configured to judge whether a low electric wave period in which the measured reception level is not greater than a predetermined threshold is present in the second period; and
the master is configured to, when concluding that the low electric wave period is present in the second period, select the time slot corresponding to the low electric wave period as the different time slot.
